# EUROPEAN PATENT APPLICATION

(11) **EP 2 738 478 A2**
(43) Date of publication of application: **04.06.2014**
(21) Application number: 13163467.7
(22) Date of filing: 12.04.2013
(51) Int. Cl.: F24F 11/00, G06F 17/30

(54) **Intelligent comfort management using natural language processing to interface with a comfort system controller**

(30) Priority: 28.11.2012 US 201213687582
(71) Applicant: Lennox Industries Inc., Richardson, TX 75080 (US)
(72) Inventor: Mowery, Keith, Richardson, TX Texas 75080 (US); Khiani, Sunil K., Richardson, TX Texas 75080 (US); Lazar, Steve, Richardson, TX Texas 75080 (US); Vendt, Steve, Richardson, TX Texas 75080 (US)
(74) Representative: Williams, David John

(57) **Abstract**

Advantageously employing natural language processing for operating comfort systems is disclosed herein. A method of operating a comfort system for an enclosed space, a management system and a HVAC apparatus are provided. In one embodiment, the method includes: (1) receiving from a user a natural language input associated with the comfort system, (2) determining a response to the natural language input based on the comfort system and (3) providing the response, the response including at least one of initiating an operation of the comfort system and communicating with the user.

## Description

### CROSS REFERENCE TO RELATED APPLICATION

This Application claims the benefit of U.S. Application Serial No. 13/687,582 filed on November 28, 2012 entitled INTELLIGENT COMFORT MANAGEMENT USING NATURAL LANGUAGE PROCESSING TO INTERFACE WITH A COMFORT SYSTEM CONTROLLER, commonly assigned with the present invention and incorporated herein by reference.

### TECHNICAL FIELD

This application is directed, in general, to a control system using an intelligent natural language processing (NLP) interface and, more specifically, to employing NLP for managing a comfort system.

### BACKGROUND

Various systems exist to provide a comfortable environment for users in such enclosed spaces as houses, offices, warehouses, etc. These systems address the senses of users and are controlled by the users to obtain a desired level of comfort. Consider for example a heating, ventilation and air conditioning (HVAC) system, a user typically communicates with an HVAC system using a thermostat to obtain a desired temperature. By way of a thermostat, a user can turn a setpoint temperature up or down, program automatic changes in the setpoint temperature, configure aspects of the HVAC system and monitor HVAC system status.

Users find some thermostat interfaces relatively straightforward and familiar. However, operating a thermostat does require some knowledge of its functions and the commands needed to instruct the HVAC system how to behave. Similarly, operating other types of systems such as lighting and audio visual, also requires knowledge of the functions and commands needed to control operations.

### SUMMARY

In one aspect, a method of operating a comfort system for an enclosed space is disclosed. In one embodiment, the method includes: (1) receiving from a user a natural language input associated with the comfort system, (2) determining a response to the natural language input based on the comfort system and (3) providing the response, the response including at least one of initiating an operation of the comfort system and communicating with the user.

In another aspect, a management system for a comfort system of an enclosed space is disclosed. In one embodiment, the management system includes: (1) a user interface configured to receive a natural language input from a user and associated with the comfort system and (2) a responder configured to receive the natural language input and employ a knowledge reservoir of the comfort system to determine a response thereto, wherein the response includes at least one of initiating an operation of the comfort system and communicating with the user.

In yet another aspect, a HVAC apparatus of an HVAC system for an enclosed space is disclosed. In one embodiment, the HVAC apparatus includes: (1) a user interface configured to receive a vocal natural language input from a user associated with a function of the HVAC system and (2) a responder configured to provide a natural language audio response based on the vocal natural language input, wherein the natural language audio response is determined from a knowledge reservoir of the HVAC system and the vocal natural language input and corresponds to action performed by or to the HVAC system.

### BRIEF DESCRIPTION

Reference is now made to the following descriptions taken in conjunction with the accompanying drawings, in which:
FIG. 1 illustrates a block diagram of an embodiment of a comfort management system constructed according to the principles of the disclosure;
FIG. 2 illustrates a block diagram of embodiment of a comfort system in which a comfort management system or a comfort system apparatus constructed according to the principles of the disclosure can be used;
FIG. 3 illustrates a block diagram of an embodiment of a comfort system having multiple comfort system apparatuses constructed according to the principles of the disclosure;
FIG. 4 illustrates an embodiment of a sequencing diagram of the control architecture 300 of FIG. 3 or the comfort management system 100 of FIG. 1;
FIG. 5 illustrates another embodiment of a sequencing diagram of the control architecture 300 of FIG. 3 or the comfort management system 100 of FIG. 1; and
FIG. 6 illustrates a flow diagram of an embodiment of a method of operating a comfort system carried out according to the principles of the disclosure.

### DETAILED DESCRIPTION

The use of artificial intelligence is gaining notable acceptance in communication devices, such as cellphones. One example of a NLP device is a cellphone that uses intelligent natural language processing to answer questions, make recommendations, and perform actions by delegating requests to an expanding set of web services. Such devices include NLP software that can adapt to the user's individual preferences over time and personalize results, as well as accomplish tasks, such as making dinner reservations or reserving a taxicab, etc.

Disclosed herein is a NLP architecture that advantageously employs NLP to direct the operation, management and maintenance of a comfort system of, for example, an enclosed space. The NLP architecture uses a natural language processor to interface with and initiate, maintain, or change control parameters regarding the operation or maintenance of comfort systems. A comfort system is directed to providing and managing sensory environments for a user. A comfort system, for example, includes a HVAC system, lights or lighting systems, audio systems and video systems. Embodiments of a method of operating a comfort system, a comfort management system and a comfort system apparatus are disclosed that receive a natural language input. In some embodiments, a comfort management identifier is determined or generated from the natural language input. The comfort management identifier is a phrase, word, letter or sentence that corresponds to responses associated with a comfort system. A response is an answer, question or action associated with a comfort system including associated with the operation, maintenance, configuration and status of a comfort system. A natural language input is provided by a user via voice or text, such as via a text message or an e-mail.

The disclosed embodiments allow a user to interact with a comfort system to obtain information therefrom and control operation thereof via natural language. As such, a user does not have to learn how to operate the controls of a comfort system or operate the controls via touch; instead, a user can use natural language. Considering an HVAC system of a home, a user can control operation of the HVAC system through statements such as, "I am hot" or "It is cold in here." Continuing the example of an HVAC system, the disclosure works well with intelligent HVAC thermostat controllers, such as those disclosed in U.S. Application Serial Nos. 12/603,464, 12/603,449, 12/603,382, 12/603,526, 12/603,527, 12/603,490, 12/603,473, 12/603,525, 12/603,512, and 12/603,431, all of which were filed on October 21, 2009, are commonly owned with this application and are incorporated herein by reference.

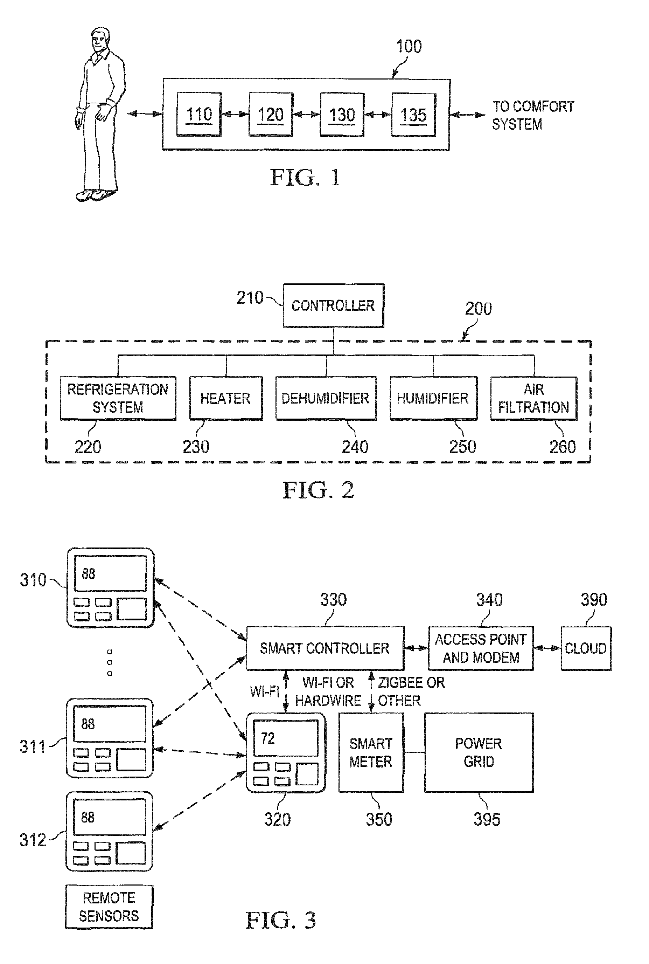

FIG. 1 illustrates a block diagram of an embodiment of a comfort management system 100 constructed according to the principles of the disclosure. The comfort management system 100 includes a user interface 110, a translator 120 and a responder 130. The comfort management system 100 can be a distributed system wherein each or at least some of the components are not located within a single device. In other embodiments, the comfort management system 100 is a wholly integrated system located within a single device. For example, in some embodiments, the comfort management system 100 is implemented within a comfort system apparatus, such as a HVAC controller, a thermostat, a sensor, a light switch, an electrical outlet, etc. Additionally, portions of each function of the comfort management system 100 can be wholly integrated within a single component or be distributed over various components or devices.

The user interface 110 is configured to receive a natural language input. In one embodiment, the user interface 110 includes a voice sensor and a microphone that detects spoken words of a user. In some embodiments, the user interface 110 includes a microphone to receive the natural language input and a speaker to provide an audio response or an audio portion of a response to the user according to the natural language input.

In one embodiment a NLP device is employed as the user interface 110. The NLP device can be a device that is not a comfort system device but includes a NLP functionality that can be employed. For example, a mobile telephone having a NLP functionality can be employed as the user interface 110. In one embodiment, an iPhone by Apple of Cupertino, California, that includes the Siri application can be used. Thus, different embodiments of the disclosure can advantageously employ devices to communicate with comfort systems that already have NLP functionality.

In some embodiments, the user interface 110 or at least a portion thereof is implemented within a comfort system apparatus. As such, the user interface 110 can be within a thermostat, a light switch, a speaker, a sensor or another component of a comfort system that includes the necessary processing capability to communicate with a user via natural language.

The translator 120 is configured to convert an audio natural language input into text. As such, the translator 120 is configured to convert the detected speech into text. In one embodiment, the translator 120 includes a processor or is part of a processor that is configured to convert the detected speech. In one embodiment, the translator 120 employs another processor or application to convert the detected speech. In some embodiments, the user interface 110 employs an application via a communications network to convert the detected speech. As such, the translator 120 can be coupled to a communications network to communicate with a distal processor or application. The distal processor or application can be part of a cloud architecture (*i.e*., the cloud). In one embodiment, the translator 120 can be or can employ a speech recognition application from Nuance Communications of Burlington, Massachusetts. In other embodiments, speech recognition applications from similar companies can also be employed. The speech recognition application can be contacted via a conventional communications network that is wired, wireless, or a combination thereof. In some embodiments as noted above, the translator 120 includes an embedded speech recognition application. As such, the speech-to-text conversion can be done locally. The local speech recognition application, as with the distal application, can be provided by Nuance Communications or other speech recognition companies.

The responder 130 is configured to receive the natural language input and employ a knowledge reservoir 135 of the comfort system to determine a response thereto. The response can include initiating an operation of the comfort system and/or communicating with the user. In some embodiments, the responder 130 is configured to determine a comfort management identifier from the natural language input. The responder 130 can employ text based on the natural language input from the translator 120 to determine the comfort management identifier or identifiers. In some embodiments, the responder 130 is configured to employ or include NLP artificial intelligence to determine the comfort management identifier; as such, the responder 130 can include the necessary logic for the NLP artificial intelligence. A manufacturer, owner or user of the comfort system or a comfort system apparatus can create a list of phrases, words, sentences or letters to be recognized as comfort management identifiers. Additionally, the responder can be configured with the logic to generate relationships between natural language text and comfort management identifiers in real-time. In one embodiment, the responder 130 is configured to interact with a conventional NLP application, such as Sira, to determine the comfort management identifier.

The responder 130 is also configured to determine a response to the natural language input. The responder 130 employs a knowledge reservoir 135 of the comfort system that is a database that includes stored therein operation settings, user preferences, operating parameters, etc. In some embodiments, the knowledge reservoir 135 is a part of the responder 130. In other embodiments, the knowledge reservoir 135 is coupled to the responder 130 via conventional means.

The responder 130 is further configured to send the response to the comfort system to direct operation thereof. In some embodiments, the responder 130 transmits the response to a controller of the comfort system. In some embodiments, the responder 130 sends the response to the comfort system and the user. As such, the comfort management system 100 can receive feedback from the response or more information from the user that can then be employed to adjust or alter the response. In some embodiments, the responder 130 employs both the translator 120 and the user interface 110 to communicate the response to the comfort system and/or the user. In other embodiments, the responder 130 only employs the user interface 110 to communicate the response or a portion thereof to the user.

In one embodiment, the comfort management system 100 is a single device including the user interface 110, the translator 120 and the responder 130. In one embodiment, the comfort management system 100 can be incorporated into a single controller of a comfort system. For example, the comfort management system 100 may be incorporated into a single controller of an HVAC system, such a main HVAC controller, a thermostat or a sensor that controls the operation of an HVAC system. FIG. 2 provides an example of such an HVAC system.

As noted above, in one embodiment the user interface 110 is configured to receive a vocal natural language input from the user and send that audio natural language input over a cellular network or another type of communications network, such as the Internet, to the translator 120. As such, the user interface 110 can be a NLP device such as a cellphone, a personal computer, or the previously mentioned HVAC controller. The translator 120 operates as a NLP interface that converts the audio natural language input initiated by the user to natural language text that is sent to the responder 130 which operates as a semantic server. The responder 130 diagnoses the natural language text and determines a response based thereon and the knowledge reservoir 135. In one embodiment, the responder 130 is configured to determine comfort identifiers based on the natural language text and the knowledge reservoir 135 to then determine a response. The responder 130 is configured to then transmit the response to a comfort system controller. In some embodiments, this would also include communicating, via the NLP device, a portion of the response to the user such as, what action has been taken.

As an example, a user might speak into his cellphone, saying, "I am hot." In such instances with the NLP device is a cellphone or other portable NLP device, it may be desirable that the cellphone have GPS capability to know that the user is in or close to the user's living space. If the cellphone does have GPS capability and the user is close to or in the living space, then the system would act upon the request. If the cellphone does not have GPS capability, then the system would act upon the request anyway. A NLP third party semantic proxy server can then translate (*i.e.*, the translator 120) the user's request into natural language text for an action to be taken. For example, when the user speaks the phrase, "I am hot". The semantic proxy server would translate this phrase to text and the responder 130 would determine that the user wants to lower the heater's setpoint. Then the responder 130 employing the knowledge reservoir 135, for example, use an occupancy detector, such as GPS, to see if the user is at or near the living space, then check to see if the furnace is at a point where it can adjust the setpoint, and check to see if the furnace is in heating mode. If the knowledge reservoir 135 verifies that the requested action can be taken, then the responder 130 is so notified, after which it issues a command to lower setpoint. It should be noted that the foregoing is given as an example of operation only and that other embodiments may not involve the use of a third party server. Instead, a local translator 120 may be employed, the knowledge reservoir 135 might function as a semantic server.

In one embodiment, operational parameters of a comfort system can be stored in the knowledge reservoir 135 and a copy can be located on NLP devices. Considering a HVAC system, the master HVAC operational parameter list, such as blower speed, operation mode setpoints, *etc*., is contained on the HVAC knowledge reservoir and a copy of this list can be placed on the NLP devices, such as a thermostat, a sensor, a cellphone, a computer, etc. If through an action taken, a parameter is changed, the HVAC knowledge reservoir 135 can change the master list and lists on all of the NLP devices used to interface with the HVAC system. This aspect provides a more secure system and prevents an unauthorized user from changing the settings.

Following a list of commands that might be given and actions taken in response to the command. It should be understood that these are examples only.

| Sentence | Action |
|---|---|
| (User) "I am hot." | "I understand." |
| | If setpoint is less than the temperature (i.e. already cooling), lower the setpoint by 1 degree. |
| | If setpoint is greater than the temperature (i.e., not cooling), then set the setpoint 1 degree below current temperature. |
| (User) "I am very hot." | "I understand." |
| | If setpoint is less than the temperature (i.e. already cooling, lower the setpoint by 2 degrees. |
| | If setpoint is greater than the temperature (i.e., not cooling), then setpoint 2 degrees below current temperature. |
| (User) "Start Cooling." | If system is in wait mode, respond with "The system is waiting." |
| | If system is cooling, respond with "System is already cooling." |
| | Otherwise, set the setpoint 1 degree below current temperature. |
| (User) "It is time to replace the filter." | Offer quotes from the user's preferred vendors in email or where user can purchase new filter. |
| (User) "The upstairs AC is broken." | "Do you want to place a maintenance call?" |
| | If user says "yes," place a call to registered dealer or registered home warranty company. |
| (User) "My utility bill is high." | Turn green settings such as Auto Away, adjust the non-programmed and programmed cooling/heating setpoints by a given number of degrees. Enable feedback when setpoint is outside of green zone. |
| (Installer) "Set first stage differential to two degrees." | Sc.Parameter.FirstSStageDifferential = 2 degrees |
| (Installer) "Set Factory defaults." | Change the system settings to factory defaults. |

Here is another example of a request and action taken that might occur.

| | |
|---|---|
| (User) "Controller, I am hot." | "1 have lowered your setpoint in your bedroom zone and placed the rest of the zones in away mode." |
| (User) "Please remember to wake me up at 6 am." | "Yes, I will set an alarm for this important event. Did you know that the air filter is dirty? Should I have your dealer install the new filter at a cost of $50?" |
| (User) "No. I want to install the filter myself." | "Do you want is shipped to your house?" |
| (User) "Yes" | "I have just ordered you a new filter, and it will be mailed to your address." |

FIG. 2 illustrates a block diagram of embodiment of a comfort system 200 in which a comfort management system or a comfort system apparatus constructed according to the principles of the disclosure can be used. In the illustrated embodiment, the comfort system 200 is an HVAC system. The HVAC system 200 includes a controller 210 and various components, units or subsystems (generally referred to herein as components) that condition air for an enclosed space. Accordingly, the HVAC system 200 includes a refrigeration system 220, a heater 230, a dehumidifier 240, a humidifier 250 and air filtration 260.

The controller 210 is coupled to one or more of the HVAC components for conditioning the air within an enclosed space such as a house. In some embodiments, the controller 210 itself may include the comfort management system 100 or a portion thereof to control the various HVAC components for conditioning the air. For example, the controller 210 can include an audio transceiver that is configured to have voice recognition capabilities and receive and transmit audio speech signals. In those embodiments where the controller is configured to have voice recognition capabilities, the controller 210 may be programmed to receive and recognize only those voices that the primary user wishes to have authorization to interact with the controller. For example, if four family members reside in a living space, the controller 210 may be programmed to recognize each of their voices, but allow certain members to control certain functions of the HVAC system 200.

In yet another embodiment, the audio transceiver system may be separate from the controller 210. For example, the controller 210 may be couplable, either by hardwire or wirelessly, to one or more speakers that are located in the living space and that include audio transceivers. As such, various apparatuses from different comfort systems can be employed in a control architecture for one or multiple of the comfort system.

In addition, the controller 210 may be equipped with memory and a microprocessor for storing and processing HVAC knowledge data stored in the memory of the controller 210. In such embodiments, the controller 210 is a self-contained unit with which the user can interact. In another embodiments, the controller may be couplable to a separate memory and micro-processing device, such as a server located within the living space or distal to the living space, such as a third party semantic server that is widely accessible and is capable of learning and recognizing phrases by interacting with a large number of people.

The controller can be hardwired to the remote server in those instances where the server is located within the living space, or the controller may be configured to access the server wirelessly over a local WiFi, or over the Internet. In such embodiments, the controller 210 can be programmed to appear as a web browser that can communicate over the Internet with a remote or distal HVAC knowledge database server.

In yet another embodiment, the controller 210 may be configured to receive and interpret text messages or e-mails sent from a cellphone or a computer. In such instances, the controller 210 would have an associated http address or phone number associated with it to allow communication with these devices.

In one embodiment, the controller 210 is a dedicated system controller for the HVAC system 200. In another embodiment, the controller 210 or at least a portion thereof is implemented in a thermostat or a sensor. Thus, a smart sensor or thermostat can be configured to include portions of the 100. In some embodiments, a sensor or thermostat are configured to interact with a system controller to control operation of the HVAC system 200 in response to natural language inputs. FIG. 3 illustrates an example of a control architecture 300 wherein a controller, thermostat and sensors are configured to direct the operation of a comfort system or systems.

FIG. 3 illustrates a block diagram of an embodiment of a control architecture 300 for a comfort system constructed according to the principles of the disclosure. The control architecture 300 includes remote sensors, 310, 311, 312, a thermostat 320 and a smart controller 330. Also illustrated are an access point or modem 340 and a smart meter 350 that provide access to a communications network, such as a cloud architecture (*i.e*., the cloud 390) and a power grid 395, respectively. The various components of the control architecture 300 can be connected via wired, wireless or a combination of wired and wireless connections. In addition to the functions described herein, the sensors 311, 312, 313, the thermostat 320 and the controller 330 can be configured to perform traditional functions such as measure temperature and control/direct operation of the comfort system. For example, the sensors 311, 312, 313, can include the functionality of a Comfort Sensor available from Lennox Industries Inc. of Richardson, Texas, including model numbers 18W65, 18W66, 18W67 and 18W68, with the additional functionality disclosed herein. The thermostat 320 can include the functionality and be configured to operate as an icomfort Touch^{®} Touchscreen Thermostat also available from Lennox Industries Inc., with the additional functionality disclosed herein.

The access point or modem 340 can be a conventional device. The smart meter 350 is an electricity consumption measurement device that provides an interface between an enclosed space and the power grid 395. The smart meter 350 can be a conventional device having power saving or green functionality.

The control architecture 300 is configured to interact with an HVAC system, such as the HVAC system 200. The control architecture 300 can also be configured to interact with other comfort systems such as a lighting system. These two comfort systems will be discussed herein as examples.

The control architecture 300 is configured to employ natural language inputs to control operation of the HVAC and lighting systems. The control architecture 300 is also configured to employ occupancy detectors to determine when users are within a particular zone of an enclosed space to assist in managing the operation of the HVAC and lighting systems. The sensors 310, 311, 312, and/or thermostat 320, for example, may include a microphone, a motion detector, a heat sensor, a GPS receiver or another detection device to determine when a user is within a certain room or space of the enclosed space. The sensors 310, 311, 312, and the thermostat 320 can also include a processor and communication interface.

The sensors 310, 311, 312, can be remote sensors configured to determine the environment within a particular enclosed space. The sensors 310, 311, 312, can include conventional sensing devices such as a thermometer, a hygrometer, etc. The sensors 310, 311, 312, can be configured for wireless, wired or both type of communication. In some embodiments, the functionality of the sensors 310, 311, 312, are embedded within components of a comfort system. For example, in one embodiment sensor 311 is within or part of an electrical outlet or a light switch. Thus, in some embodiments, the sensors 310, 311, 312, are in comfort system apparatuses and each of the sensors can be in a different type of comfort system apparatus.

In one embodiment, the control architecture 300 is configured to control multiple comfort systems at the same time. Thus, the control architecture 300 can direct the operation of the HVAC system while also controlling lighting. In some embodiments, each of the various components of the control architecture system 300 can control multiple comfort systems. In other embodiments, some of the components thereof are configured to be associated with a single comfort system.

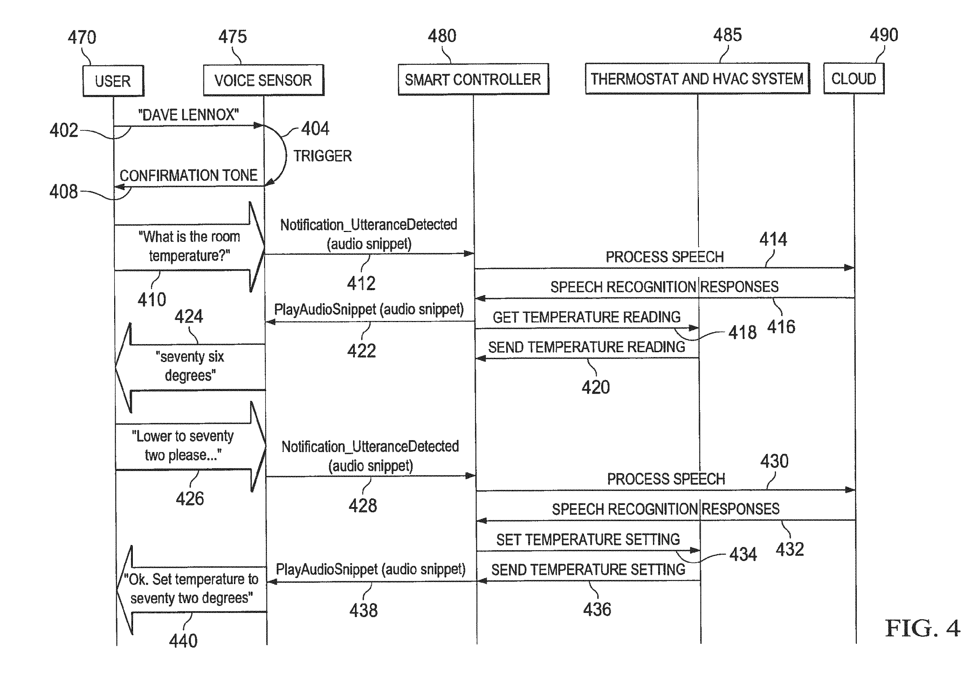

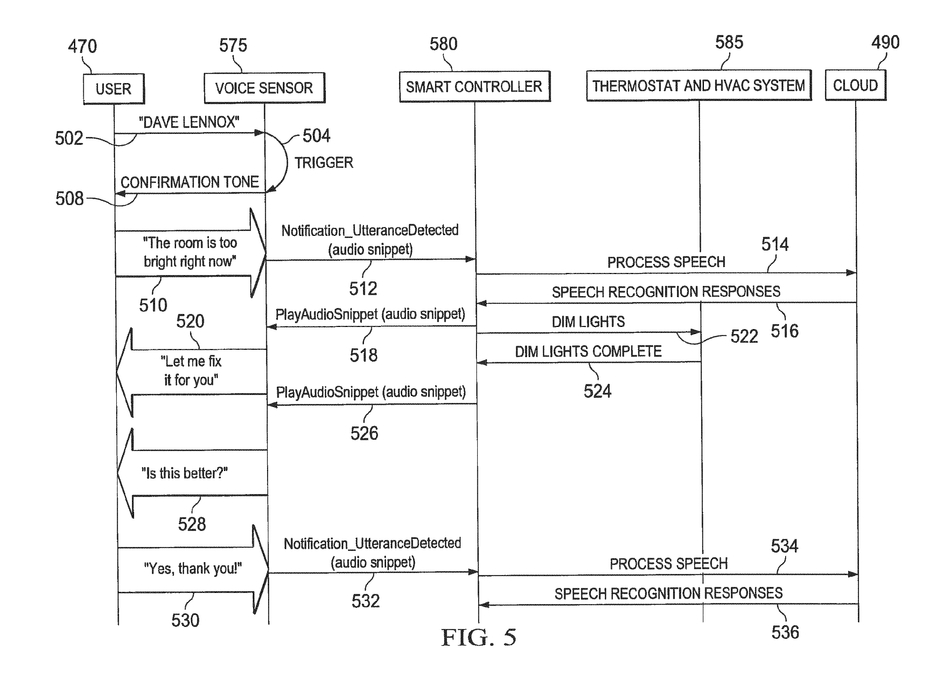

The control architecture 300 is configured to provide independent control of a portion of an enclosed space, such as a room. Thus, each of the sensors 310, 311, 312, and/or the thermostat 320 can be assigned to a particular space to monitor and control the environment therein. In addition to control via natural language inputs, the sensors 310, 311, 312, and thermostat 320 with the above noted occupancy detectors can be employed to determine the presence of a user to verify user intent for a particular location within the enclosed space. The occupancy detectors can also be used to integrate with ZigBee^{®} Smart Energy and determine who is in a particular space and automatically adjust the environment in that space for a particular user. Accordingly, the control architecture 300 can adjust the lighting, temperature, humidity, ventilation, etc., within a particular room corresponding to the user who is detected therein. The user can be detected via the natural language input (*e.g*., voice identification) or by identifying the particular NLP device associated with a user. The natural language input can also be used by the control architecture to provide interactive diagnostics for the comfort systems. FIG. 4 and FIG. 5 provide examples representing the functionality of the control architecture 300. The interactive sequences of FIG. 4 and FIG. 5 can also be used by the comfort management system 100 of FIG. 1. For the control architecture 300, the sensor 475, smart controller 480 and cloud 490 correspond to one of the sensors 310, 311, 312, the smart controller 330, and the cloud 390 of FIG. 3, respectively. Considering the comfort management system 100, the sensor 475, smart controller 480 and cloud 490 correspond to the user interface 110, the responder 130 and the translator 120 of FIG. 1, respectively. The sequencing examples in FIG. 4 and FIG. 5 represent natural language inputs that are vocal inputs. As such, the sensor 475 includes a voice sensor. Similar control sequences can represent natural language inputs that are textual wherein the sensor 475 is configured to receive a natural language textual input that is then forwarded to the cloud 490 via the smart controller 480 wherein instead of processing speech, the text is processed for comfort identifiers. The comfort system represented in FIG. 4 and FIG. 5 is an HVAC system. The HVAC system 485 can be the HVAC system 200 in FIG. 2.

In FIG. 4, the control sequence begins with an utterance or a vocal statement 408 by a user 470. The vocal statement 408 is a start statement that has been established to initiate a NLP procedure for a comfort system. The sensor 475 detects the start statement as a trigger 404 for the NLP procedure and sends a confirmation tone 408 in response. The sensor 475 is configured to employ a look-up table to verify the start statement 402 as the trigger 404. After hearing the confirmation tone 408, the user 470 verbalizes a first statement 410 in the form of a question. The sensor 475 detects the first statement 410 and provides an audio snippet 412 thereof to the smart controller 480. The smart controller 480 processes the audio snippet 412 including formatting the audio snippet 412 for transmission and sends the processed speech 414 to the cloud 490. The cloud 490 represents a voice-to-text server or service that generates a text response 416 to the processed speech 414 and transmits it back to the smart controller 480. The smart controller 480 determines comfort identifiers from the text response 416 and generates a response based thereon. The smart controller 480 can employ a look-up table to determine the comfort identifiers and an associated response. Additionally, the smart controller 480 can include the necessary artificial intelligence to determine comfort identifiers from the text response 416. In some embodiments, the smart controller 480 is configured to generate comfort identifiers from the text response 416. As such, the smart controller 480 is configured with the necessary logic to learn and expand the number of comfort identifiers and the associated responses. In some embodiments, the smart controller 480 may interact with the user 470 to generate comfort identifiers and associated responses.

Based on the comfort identifiers from the first statement 410, the smart controller 480 obtains the temperature reading from the HVAC system 485 in steps 418 and 420 and then generates and sends an audio snippet 422 declaring the obtained temperature to the sensor 475. Upon receipt, the sensor 475 plays the second statement 424 for the user 470. The user 470 then responds with a third statement 426 requesting a temperature change that is detected by the sensor 475 and sent to the smart controller 480. The smart controller 480 again processes the audio snippet 428 and sends it to the cloud 430 for processing. The cloud 490 generates a text response 432 that is sent to the smart controller 480. The smart controller 480 identifiers comfort identifiers from the text response 432 and provides a response therefrom. As such, the smart controller 434 instructs the HVAC system 485 to set the temperature to seventy two degrees in a step 434. The HVAC system 485 verifies the temperature setting and transmits the temperature setting in a step 436 to the smart controller 480. The smart controller 480 generates an audio snippet 438 based thereon and sends the audio snippet to the sensor 475 in a step 438. The sensor 475 then plays the fourth statement 440 to the user 470 to announce the action performed in response to the third statement 426.

In FIG. 5, lighting is controlled. As such, the comfort system 585 is a lighting system and the smart controller 580 is configured to control the lighting system. The smart controller 580 includes similar functionality as the smart controller 480 but is configured to interact with the lighting system 485.

In FIG. 5, the control sequence begins with an utterance or a vocal statement 502 by the user 470. The vocal statement 502 is a start statement that has been established to initiate a NLP procedure for the comfort system 585. The sensor 575 detects the start statement as a trigger 504 for the NLP procedure and sends a confirmation tone 508 in response. The sensor 575 can be the sensor 475 or a dedicated sensor with similar functionality that is configured for the lighting system 585. After hearing the confirmation tone 508, the user 470 verbalizes a first statement 510 about the lighting in the room. The sensor 575 detects the first statement 510 and provides an audio snippet 512 thereof to the smart controller 580. The smart controller 580 processes the audio snippet 512 including formatting the audio snippet 512 for transmission and sends the processed speech 514 to the cloud 490. The cloud 490 represents a voice-to-text server or service that generates a text response 516 to the processed speech 514 and transmits it back to the smart controller 580. The smart controller 580 determines comfort identifiers from the text response 516 and generates a response based thereon. The smart controller 580 can employ a look-up table to determine the comfort identifiers and an associated response. Additionally, the smart controller 580 can include the necessary artificial intelligence to determine comfort identifiers from the text response 516. In some embodiments, the smart controller 580 is configured to generate comfort identifiers from the text response 516. As such, the smart controller 580 is configured with the necessary logic to learn and expand the number of comfort identifiers and the associated responses. In some embodiments, the smart controller 580 may interact with the user 470 to generate comfort identifiers and associated responses.

Based on the comfort identifiers from the first statement 510, the smart controller 580 determines a response. As part of the response, the smart controller generates an audio snippet 518 that is sent to the sensor 575. The sensor 575 then provides the audio snippet 518 to the user 470 in a step 520. As part of the response, the smart controller 580 also directs the lighting system 585 to dim the lights in a step 522. The lighting system 585 sends a confirmation to the smart controller 580 that the lights have been dimmed in a step 524. The smart controller 580 generates and sends an audio snippet 526 to the sensor 575 asking if dimmed light are better. Based thereon, a third statement 528 is declared to the user 470 by the sensor 575 asking if the dimmed lights are better. The user 470 then responds with a fourth statement 530 indicating that the dimmed lights are better. The fourth statement 530 is detected by the sensor 575 and sent to the smart controller 580 as an audio snippet 532. The smart controller 580 again processes the audio snippet 532 and sends the processed audio 534 to the cloud 490 for processing. The cloud 490 generates a text response 536 that is sent to the smart controller 580. The smart controller 580 identifiers comfort identifiers from the text response 534 and determines that the lighting change is sufficient. As such, no response is generated.

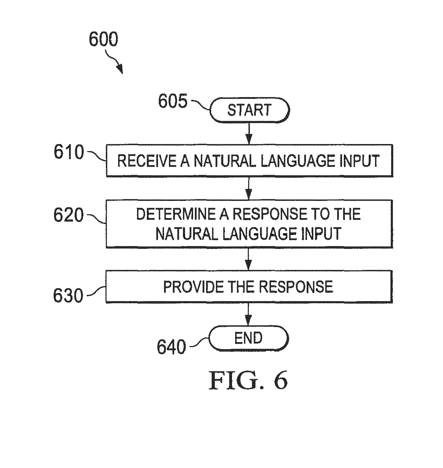

FIG. 6 illustrates flow diagram of an embodiment of a method 600 of operating a comfort system carried out according to the principles of the disclosure. The method 600 begins in a step 605.

In a step 610, a natural language input is received. A response is then determined to the natural language input in a step 620. In a step 630, the response is then provided. The method 600 then ends in a step 640.

Those skilled in the art to which this application relates will appreciate that other and further additions, deletions, substitutions and modifications may be made to the described embodiments.

The above-described apparatuses and methods, or at least a portion thereof, may be embodied in or performed by various conventional digital data processors or computers, wherein the computers are programmed or store executable programs of sequences of software instructions to perform one or more of the steps of the methods or sequences, *e.g*., steps of FIGs. 4-6. The software instructions of such programs may represent algorithms and be encoded in machine-executable form on non-transitory digital data storage media, *e.g.*, magnetic or optical disks, random-access memory (RAM), magnetic hard disks, flash memories, and/or read-only memory (ROM), to enable various types of digital data processors or computers to perform one, multiple or all of the steps of one or more of the above-described methods, e.g., one or more of the steps of the method of FIGs. 4-6, or functions of the apparatuses described herein. Additionally, an apparatus, such as a controller, a comfort system apparatus or a server, may be designed to include the necessary circuitry to perform each of or at least some of the step of the disclosed methods or functions.

Certain embodiments of the invention further relate to computer storage products with a non-transitory computer-readable medium that have program code thereon for performing various computer-implemented operations that embody the tools or carry out the steps of the methods set forth herein. Non-transitory used herein refers to all computer-readable media except for transitory, propagating signals. Examples of non-transitory computer-readable media include, but are not limited to: magnetic media such as hard disks, floppy disks, and magnetic tape; optical media such as CD-ROM disks; magneto-optical media such as floptical disks; and hardware devices that are specially configured to store and execute program code, such as ROM and RAM devices. Examples of program code include both machine code, such as produced by a compiler, and files containing higher level code that may be executed by the computer using an interpreter.

## Claims

1. A method of operating a comfort system for an enclosed space, comprising:
receiving from a user a natural language input associated with said comfort system;
determining a response to said natural language input based on said comfort system; and
providing said response, said response including at least one of initiating an operation of said comfort system and communicating with said user.

2. The method as recited in Claim 1 wherein said natural language input is vocally entered.

3. The method as recited in Claim 1 wherein said determining includes determining at least one comfort management identifier from said natural language input and from a knowledge reservoir of said comfort system.

4. The method as recited in Claim 3 wherein said comfort management identifier is a phrase, a word or a letter.

5. The method as recited in Claim 3 wherein said comfort management identifier corresponds to operating commands for said comfort system.

6. The method as recited in Claim 3 wherein said comfort management identifier corresponds to management commands for said comfort system.

7. The method as recited in Claim 1 wherein said comfort system is a HVAC system, a lighting system, an audio system or a video system of said enclosed space.

8. The method as recited in Claim 1 wherein said providing said response includes directing said operation of said comfort system according to said response.

9. A management system for a comfort system of an enclosed space, comprising:
a user interface configured to receive a natural language input from a user and associated with said comfort system; and
a responder configured to receive said natural language input and employ a knowledge reservoir of said comfort system to determine a response thereto, wherein said response includes at least one of initiating an operation of said comfort system and communicating with said user.

10. A HVAC apparatus of an HVAC system for an enclosed space, comprising:
a user interface configured to receive a vocal natural language input from a user associated with a function of said HVAC system; and
a responder configured to provide a natural language audio response based on said vocal natural language input, wherein said natural language audio response is determined from a knowledge reservoir of said HVAC system and said vocal natural language input and corresponds to action performed by or to said HVAC system.
